# EUROPEAN PATENT APPLICATION

(11) **EP 4 443 956 A1**
(43) Date of publication of application: **09.10.2024**
(21) Application number: 22898329.2
(22) Date of filing: 28.10.2022
(51) Int. Cl.: H04W 28/06, H04W 80/02, H04W 84/12

(54) **COMMUNICATION DEVICE, COMMUNICATION METHOD, AND PROGRAM**

(30) Priority: 29.11.2021 JP 2021193685
(71) Applicant: CANON KABUSHIKI KAISHA, Tokyo 146-8501 (JP)
(72) Inventor: TSUJIMARU Yuki, Tokyo 146-8501 (JP)
(74) Representative: Canon Europe Limited
(86) International application number: PCT/JP2022/040378
(87) International publication number: WO 2023/095544

(57) **Abstract**

A media access control (MAC) frame in which a bandwidth wider than a predetermined bandwidth is able to be designated by increasing at least the number of bits of a subfield relating to a bandwidth without increasing a total number of bits of a format of the MAC frame to be used in execution of Link Adaptation is transmitted.

## Description

### Technical Field

The present invention relates to the transmission and reception of an operating parameter in wireless communication.

### Background Art

In recent years, the development of communication techniques, such as a wireless local area network (LAN), has been advanced to prepare for an increasing amount of data being communicated. As a major communication standard of the wireless LAN, an Institute of Electrical and Electronics Engineers (IEEE) 802.11 standard series has been known. The IEEE 802.11 standard series includes standards such as an IEEE 802.11a/b/g/n/ac/ax standard. For example, the IEEE 802.11ax, which is the latest standard, defines a technique of achieving high peak throughput up to 9.6 gigabit per second (Gbps) using orthogonal frequency-division multiple access (OFDMA), and also improving a communication speed under a congested situation (refer to Patent Document (PTL) 1). The OFDMA stands for orthogonal frequency-division multiple access.

As a succeeding standard aimed at further throughput enhancement, improvement in frequency usage efficiency, and improvement in communication latency, a task group called IEEE 802.11be has started.

Among features having been studied in the IEEE 802.11be standard is Multi-Link communication by which one access point (AP) establishes a plurality of links with one station (STA) via a plurality of different frequency channels, and concurrently performs communication.

Further, in the IEEE 802.11be standard, as one of measures for throughput enhancement, extending a maximum value of a frequency bandwidth of radio waves to 320 megahertz (MHz) has been studied. The IEEE 802.11be has been developed under consideration of the use in a 6-gigahertz (GHz) band in addition to a 2.4-GHz band and a 5-GHz band and aims to utilize wireless communication in a frequency bandwidth up to 320 MHz.

In the IEEE 802.11 ax, an AP transmits a trigger frame to a communication partner STA to control upward communication of the STA. The trigger frame is to be used also in the IEEE 802.11be, and transmitting the trigger frame in combination with Multi-link and the frequency bandwidth of 320 MHz has been also studied.

In addition, in the IEEE 802.11, a Link Adaptation technique of recognizing and controlling a status of a communication channel is standardized as a measure for maintaining communication quality. In the Link Adaptation technique, an algorithms called a modulation and coding scheme (MCS) is used. Through an exchange of a physical layer convergence protocol data unit (PPDU) containing elements called an MCS request (hereinafter, MRQ) and an MCS feedback (hereinafter, MFB) between AP and a STA, the communication quality is monitored, and communication using an appropriate communication setting is able to be performed.

### Citation List

### Patent Literature

PTL 1: Japanese Patent Application Laid-Open No.2018-50133

### Summary of Invention

### Technical Problem

It is assumed that the Link Adaptation technique is to be applied also in the 11be standard. A media access control (MAC) frame format of an MRQ or an MFB that is used in the Link Adaptation is formulated in standards up to the 11ax standard, but is not formulated in the 11be standard. In the case of using the Link Adaptation in the 11be standard, a parameter representation method is to be increased, by extending a field size in a frame, with extension of the frequency bandwidth. However, an upper limit, i.e., total number of bits, has been set on a MAC header field size since the conventional standard, and there are not enough bits available to extend a parameter representation method in a frame format of the conventional standard.

Changing an upper limit of a MAC header field size may be a measure to extend a field size of a specific field, but in this case, there arises an issue that a MAC header size increases and communication overhead increases. In addition, because a change in MAC header field size results in complicated implementation, there is concern that product development man-hours increase.

In view of the above-described issues, the present invention is directed to the extension of representation of a parameter that accompanies the extension of a frequency bandwidth within a field size upper limit of a standard in execution of Link Adaptation in a wireless LAN complying with the IEEE 802.11.

### Solution to Problem

A communication apparatus according to an exemplary embodiment of the present invention is a communication apparatus that performs, with a counterpart apparatus, wireless communication complying with a standard of an IEEE 802.11 series, the communication apparatus transmitting a media access control (MAC) frame in which a bandwidth wider than a predetermined bandwidth is able to be designated by increasing at least the number of bits of a subfield relating to a bandwidth without increasing a total number of bits of a format of the MAC frame to be used in execution of Link Adaptation. Advantageous Effects of Invention

According to the present invention, the extension of representation of a parameter that accompanies the extension of a frequency bandwidth is able to be achieved within a field size upper limit of a standard in execution of Link Adaptation in a wireless LAN complying with the IEEE 802.11.

Other features and advantages of the present invention will become apparent from the following description with reference to the accompanying drawings. In the accompanying drawings, the same or similar components are denoted by the same reference numerals.

The accompanying drawings, which are incorporated in and constitute a part of the specification, illustrate exemplary embodiments of the present invention and, together with the description, serve to explain the principles of the present invention.

### Brief Description of Drawings

[Fig. 1] Fig. 1 is a diagram illustrating a configuration of a network according to the present invention.
[Fig. 2] Fig. 2 is a diagram illustrating a hardware configuration of a communication apparatus according to the present invention.
[Fig. 3] Fig. 3 is a diagram illustrating a functional configuration of a communication apparatus according to the present invention.
[Fig. 4] Fig. 4 is a sequence diagram illustrating an example of a method by which a communication apparatus 102 and a communication apparatus 103 perform Link Adaptation.
[Fig. 5] Fig. 5 is a flowchart illustrating processing that is executed when the communication apparatus 102 or 103 transmits a modulation and coding scheme request (MRQ).
[Fig. 6] Fig. 6 is a flowchart illustrating processing that is executed when the communication apparatus 102 or 103 transmits a solicited MRQ.
[Fig. 7] Fig. 7 is a flowchart illustrating processing that is executed when the communication apparatus 102 or 103 transmits an unsolicited MFB.
[Fig. 8] Fig. 8 is a flowchart illustrating processing that is executed when the communication apparatus 102 or 103 transmits a UL EHT TB MFB.
[Fig. 9] Fig. 9 is a diagram illustrating an example of a media access control (MAC) frame format that is communicated by the communication apparatus 102 or the communication apparatus 103.
[Fig. 10] Fig. 10 is a diagram illustrating an example of an HT Control field included in a MAC frame format that is communicated by the communication apparatus 102 or the communication apparatus 103.
[Fig. 11] Fig. 11 is a diagram illustrating an example of an A-Control field included in a MAC frame format that is communicated by the communication apparatus 102 or the communication apparatus 103.
[Fig. 12] Fig. 12 is a diagram illustrating an example of a Control List field included in a MAC frame format that is communicated by the communication apparatus 102 or the communication apparatus 103.
[Fig. 13] Fig. 13 is a diagram illustrating an example of an HE Link Adaptation field included in a MAC frame format that is communicated by the communication apparatus 102 or the communication apparatus 103.
[Fig. 14] Fig. 14 is a diagram illustrating an example of an EHT Link Adaptation for MRQ field included in a MAC frame format that is communicated by the communication apparatus 102 or the communication apparatus 103.
[Fig. 15] Fig. 15 is a diagram illustrating an example of an EHT Link Adaptation for MFB field included in a MAC frame format that is communicated by the communication apparatus 102 or the communication apparatus 103.
[Fig. 16] Fig. 16 is a diagram illustrating an example of an EHT Link Adaptation for UL EHT TB MFB field included in a MAC frame format that is communicated by the communication apparatus 102 or the communication apparatus 103.
[Fig. 17] Fig. 17 is a diagram illustrating an example of an EHT Link Adaptation for MFB/MRQ field included in a MAC frame format that is communicated by the communication apparatus 102 or the communication apparatus 103.
[Fig. 18] Fig. 18 is a diagram illustrating an example of an EHT Link Adaptation for UL EHT TB PPDU MFB/MRQ field included in a MAC frame format that is communicated by the communication apparatus 102 or the communication apparatus 103.

### Description of Embodiments

Hereinafter, exemplary embodiments of the present invention will be described in detail with reference to the accompanying drawings. Note that the configurations shown in the following exemplary embodiments are merely examples, and the present invention is not limited to the illustrated configurations.

### (Configuration of Wireless Communication System)

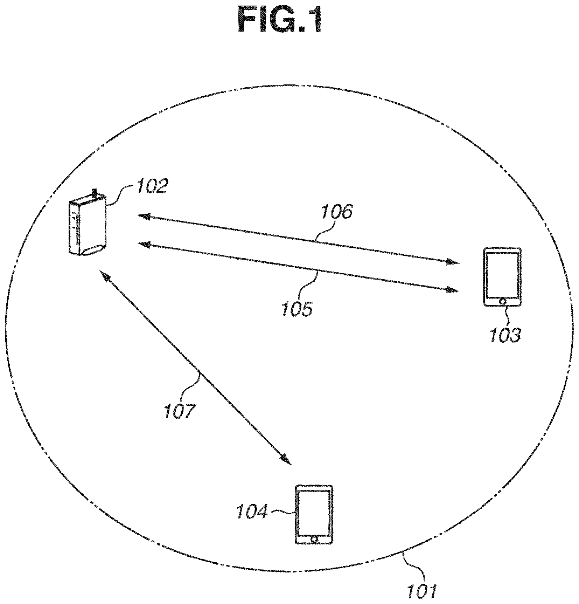

Fig. 1 illustrates a configuration of a network in which an access point (AP) 102 and stations (STAs) 103 and 104 according to the present exemplary embodiment participate. The AP 102 is a communication apparatus having a role of establishing a network 101. Here, the network 101 is a wireless network. The stations (STAs) 103 and 104 are communication apparatuses having a role of participating in the network 101.

Each communication apparatus complies with the Institute of Electrical and Electronics Engineers (IEEE) 802.11be (extremely high throughput (EHT)) standard, and can execute wireless communication complying with the IEEE 802.11be standard, via the network 101. The IEEE stands for the Institute of Electrical and Electronics Engineers. The EHT stands for extremely high throughput. The EHT may be interpreted as an abbreviation for extreme high throughput. Each communication apparatus can execute communication in frequency bands including a 2.4-gigahertz (GHz) band, a 5-GHz band, and a 6-GHz band. The frequency bands to be used by each communication apparatus are not limited to these. For example, a different frequency band, such as a 60-GHz, band may be used. In addition, each communication apparatus can execute communication using bandwidths including a 20-megahertz (MHz) band, a 40-MHz band, an 80-MHz band, a 160-MHz band, and a 320-MHz band.

By executing orthogonal frequency division multiple access (OFDMA) communication complying with the IEEE 802.11be standard, the AP 102 and the STAs 103 and 104 can implement multi-user (MU) communication in which signals of a plurality of users are multiplexed. The OFDMA communication stands for orthogonal frequency division multiple access. In the OFDMA communication, a resource unit (RU) constituting a part of divided frequency bands is allocated to each STA without redundancy, and carriers allocated to the respective STAs are orthogonal to each other. The AP can therefore concurrently communicate with a plurality of STAs.

The IEEE 802.11ax defines a method of transferring data from a STA to an AP in OFDMA. First, checking of whether there is data desired to be transmitted by an AP to each STA is performed. A frame to be checked in this process is called a buffer status report (BSR) request. In response to this, each STA transmits, to the AP, an amount of data scheduled to be transmitted to the AP. Information contained in a frame in this process is called a buffer status report (BSR).

This method is an example, and there is a different method of transmitting a BSR to the AP using another method. For example, a BSR may be contained in a data frame or a control frame to be transmitted by a STA to the AP and transmitted. Based on the BSR received from each STA, the AP allocates a STA for each sub channel, and transmits a frame serving as a starting point of data transmission. The frame serving as a starting point is called a Trigger frame. The Trigger frame contains information indicating a sub channel via which each STA is to transmit data, and an ensured period. Based on the information contained in the Trigger frame, a STA transmits data to the AP. In this manner, even in a crowded environment in which many STAs exist, the STAs can transmit data without collision.

The AP 102 and the STAs 103 and 104 execute Multi-Link communication for communication via links established via a plurality of frequency channels. An AP that executes Multi-Link communication will also be referred to as an AP Multi-Link device (MLD). A STA that executes Multi-Link communication will also be referred to as a non-AP MLD. Here, the frequency channels refer to frequency channels defined in an IEEE 802.11 series standard, via which wireless communication complying with an IEEE 802.11 series standard can be executed. In the IEEE 802.11 series standard, a plurality of frequency channels is defined for each of the frequency bands corresponding to the 2.4-GHz band, the 5-GHz band, and the 6-GHz band.

In the IEEE 802.11 series standard, a bandwidth of each frequency channel is defined as 20 MHz. By bonding with a neighboring frequency channel, a bandwidth equal to or larger than 40 MHz may be used in one frequency channel. For example, the AP 102 can establish, with the STA 103, a first link 105 via a first frequency channel in the 2.4-GHz band, and a second link 106 via a second frequency channel in the 5-GHz band, and execute communication via both links. In this case, the AP 102 maintains the second link 106 established via the second frequency channel, concurrently with the first link 105 established via the first frequency channel. In this manner, by establishing a plurality of links with the STA 103 that respectively correspond to a plurality of mutually-different frequency channels, the AP 102 can enhance throughput in communication with the STA 103.

In the Multi-Link communication, the AP 102 and the STA 103 may establish a plurality of links with different frequency bands. For example, in addition to the first link 104 in the 2.4-GHz band and the second link 105 in the 5-GHz band, the AP 102 and the STA 103 may establish a third link in the 6-GHz band. Alternatively, the AP 102 and the STA 103 may establish links via a plurality of different channels included in the same frequency band. For example, the AP 102 and the STA 103 may establish the first link 105 via a 1-channel in the 2.4-GHz band, and the second link 106 via a 5-channel in the 2.4-GHz band.

Links in the same frequency band and links in different frequency bands may be mixed. For example, in addition to the first link 105 established via the 1-channel in the 2.4-GHz band, and the second link 106 established via the 5-channel in the 2.4-GHz band, the AP 102 and the STA 103 may establish a third link via a 36-channel in the 5-GHz band. By establishing a plurality of connections with the STA 103 in different frequency bands, even in a case where a certain band is busy, the AP 102 can execute communication with the STA 103 in the other bands. This can prevent a decline in throughput in communication with the STA 103.

A plurality of links to be established by the AP 102 and the STA 103 in the Multi-Link communication are only required to be different at least in their frequency channels. A channel interval between frequency channels of a plurality of links to be established by the AP 102 and the STA 103 in the Multi-Link communication is only required to be larger than at least 20 MHz. While, in the present exemplary embodiment, the AP 102 and the STA 103 establish the first link 105 and the second link 106, the AP 102 and the STA 103 may establish three or more links.

In the case of executing Multi-Link communication, the AP 102 establishes a plurality of wireless networks in such a manner that the plurality of wireless networks corresponds to the respective links. In this case, the AP 102 internally includes functions of a plurality of APs, and operates the APs to establish the respective wireless networks. The APs included in the AP 102 may be one or more physical APs, or may be a plurality of virtual APs formed on one physical AP. In a case where a plurality of links is established in frequency channels belonging to a common frequency band, a wireless network common to the plurality of links may be used.

In the Multi-Link communication, the AP 102 and the STAs 103 and 104 divide a single piece of data and transmit the divided data pieces to a counterpart apparatus via a plurality of links. Alternatively, the AP 102 and the STAs 103 and 104 may transmit the same data via a plurality of links, to utilize a communication via one link as a backup communication of a communication to be executed via the other link.

Specifically, the AP 102 transmits the same data to the STA 103 via a first link established via a first frequency channel, and a second link established via a second frequency channel. In this case, for example, even if an error occurs in communication via the first link, because the same data is transmitted via the second link, the STA 103 can receive the data transmitted from the AP 102. Alternatively, the AP 102 and the STA 103 may use a different link depending on the type of a frame to be communicated or the type of data to be communicated. Fig. 1 illustrates a configuration in which the AP 102 and the STA 104 perform wireless communication via one link, but may perform Multi-Link communication as described above. Fig. 1 merely illustrates that an AP and a STA can perform wireless communication even via one link.

For example, the AP 102 may transmit a management frame via the first link, and transmit a data frame containing data via the second link. Specific examples of the management frame include a Beacon frame, a Probe Request frame/Response frame, and an Association Request frame/Response frame. In addition to these frames, a Disassociation frame, an Authentication frame, a De-Authentication frame, and an Action frame are also called management frames.

The Beacon frame is a frame for reporting information on a network. The Probe Request frame is a frame for requesting network information. The Probe Response frame is a response to the Probe Request frame and is a frame for providing network information. The Association Request frame is a frame for requesting connection. The Association Response frame is a response to the Association Request frame and is a frame indicating a connection permission or error. The Disassociation frame is a frame for disconnecting connection. The Authentication frame is a frame for authenticating a counterpart apparatus, and the De-Authentication frame is a frame for stopping authentication of a counterpart apparatus and disconnecting connection. The Action frame is a frame for performing an additional function other than the above-described functions. The AP 102 and the STAs 103 and 104 transmit and receive a management frame complying with an IEEE 802.11 series standard. In a case of transmitting data on a captured image, for example, the AP 102 may transmit metainformation, such as dates, parameters (aperture value and shutter speed) in image capturing, and position information, via the first link, and transmit pixel information via the second link.

The AP 102 and the STAs 103 and 104 may be capable of executing multiple-input and multiple-output (MIMO) communication. In this case, the AP 102 and the STAs 103 and 104 each include a plurality of antennas, and one transmits a different signal from each antenna using the same frequency channel. A reception side simultaneously receives all signals that have reached from a plurality of streams using the plurality of antennas, separates the signals of the streams, and decodes the signals. By executing MIMO communication in this manner, the AP 102 and the STAs 103 and 104 can communicate a larger amount of data within the same time as compared with a case where the MIMO communication is not executed. In addition, the AP 102 and the STAs 103 and 104 may execute MIMO communication via a part of links in the case of performing Multi-Link communication.

While the AP 102 and the STAs 103 and 104 comply with the IEEE 802.11be standard, the AP 102 and the STAs 103 and 104 may additionally comply with at least any one of legacy standards, which are standards developed earlier than the IEEE 802. 1 The standard, and succeeding standards of the IEEE 802.11be. Here, the legacy standards refer to the IEEE 802.11a/b/g/n/ac/ax standards. In the present exemplary embodiment, at least any one of the IEEE 802.1 1a/b/g/n/ac/ax/be standards and the succeeding standards is called an IEEE 802.11 series standard. In addition to the IEEE 802.11 series standards, the AP 102 and the STAs 103 and 104 may comply with other communication standards such as Bluetooth^{®}, near field communication (NFC), an ultra wide band (UWB), ZigBee, and multi band OFDM alliance (MBOA).

The UWB stands for an ultra wide band, and the NMOA stands for a multi band OFDM alliance. The OFDM stands for Orthogonal Frequency Division Multiplexing. The NFC stands for near field communication. Examples of the UWB include a wireless universal serial bus (USB), wireless 1394, Winners Information Network (WiNET), and the like. The AP 102 and the STAs 103 and 104 may comply with a communication standard of wired communication of a wired LAN or the like.

Specific examples of the AP 102 include a wireless LAN router, a personal computer (PC), and the like, but the AP 102 is not limited to these. The AP 102 may be any communication apparatus as long as the communication apparatus can execute Multi-Link communication with a different communication apparatus. Further, the AP 102 may be an information processing apparatus such as a wireless chip that can execute wireless communication complying with the IEEE 802.11be standard. Specific examples of the STAs 103 and 104 include a camera, a tablet, a smartphone, a PC, a mobile phone, a video camera, and the like, but the STAs 103 and 104 are not limited to these. The STAs 103 and 104 may be any communication apparatus as long as the communication apparatus can execute Multi-Link communication with a different communication apparatus. Further, the STAs 103 and 104 may be an information processing apparatus such as a wireless chip that can execute wireless communication complying with the IEEE 802.11be standard. While the network illustrated in Fig. 1 is a network including one AP and one STA, the number of APs and the number of STAs are not limited to these. The information processing apparatus such as a wireless chip includes an antenna for transmitting a generated signal.

While, in the present exemplary embodiment, the AP 102 is an access point, and the STAs 103 and 104 are stations, the configuration is not limited to this. All of the AP 102 and the STAs 103 and 104 may be stations. In this case, although the AP 102 is a station, the AP 102 operates as an apparatus having a role of establishing a wireless network for a link with the STAs 103 and 104.

### (Configuration of AP and STA)

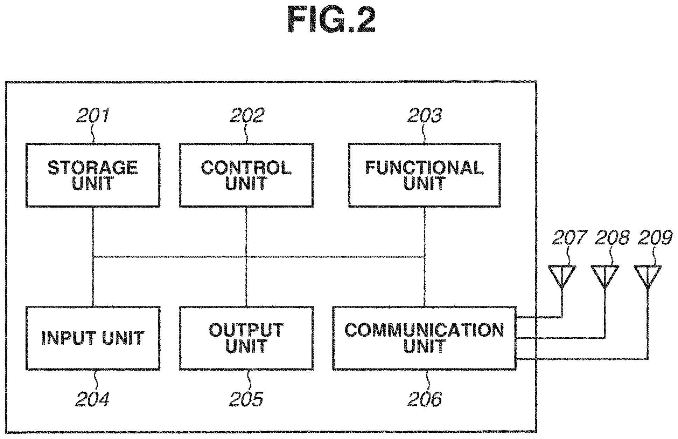

Fig. 2 illustrates a hardware configuration example of the AP 102 according to the present exemplary embodiment. The STAs 103 and 104 can have a similar configuration. The AP 102 includes a storage unit 201, a control unit 202, a functional unit 203, an input unit 204, an output unit 205, a communication unit 206, and antennas 207, 208, and 209.

The storage unit 201 includes one or more memories, such as a read only memory (ROM) and a random access memory (RAM), and stores computer programs for various operations to be described below, and various types of information such as communication parameters for wireless communication. The ROM stands for a read only memory, and the RAM stands for a random access memory. Aside from memories such as a ROM and a RAM, a storage medium such as a flexible disk, a hard disk, an optical disk, a magneto optical disk, a compact disk read only memory (CD-ROM), a CD recordable (CD-R), a magnetic tape, a nonvolatile memory card, or a digital versatile disk (DVD) may be used as the storage unit 201. The storage unit 201 may include a plurality of memories and the like.

For example, the control unit 202 includes one or more processors such as a central processing unit (CPU) and a micro processing unit (MPU), for example. By executing computer programs stored in the storage unit 201, the control unit 202 controls entire operation of AP 102. The control unit 202 may control the entire AP 102 in cooperation with computer programs stored in the storage unit 201, and an operating system (OS). In addition, the control unit 202 generates data and signals (radio frames) to be transmitted in the communication with a different communication apparatus. The CPU stands for a central processing unit, and the MPU stands for a micro processing unit. The control unit 202 may include a plurality of processors, such as multi-core processors, and control entire operation of AP 102 using the plurality of processors. The control unit 202 further controls the functional unit 203 to execute predetermined processing, such as wireless communication, image capturing, printing, and projection. The functional unit 203 is hardware for an AP 100 executing the predetermined processing.

The input unit 204 receives various operations from the user. The output unit 205 performs various outputs to the user via a monitor screen and a speaker. Here, the output performed by the output unit 205 may be display on the monitor screen, voice output by the speaker, vibration output, or the like. Both the input unit 204 and the output unit 205 may be implemented by one module like a touch panel. The input unit 204 and the output unit 205 may be each formed integrally with the AP 102, or may be each formed separately from the AP 102.

The communication unit 206 controls wireless communication complying with the IEEE 802.11be standard. In addition, the communication unit 206 may control wireless communication complying with other IEEE 802.11 series standards in addition to the IEEE 802.11be standard, and may control wired communication via a wired LAN or the like. The communication unit 206 controls the antennas 207, 208, and 209 and transmits and receives signals for wireless communication that have been generated by the control unit 202. In a case where the AP 102 including a plurality of communication units 206 establishes a plurality of links in Multi-Link communication, one communication unit 206 establishes at least one link. Alternatively, the AP 102 may establish a plurality of links using one communication unit 206. In this case, by switching, in a time division manner, a frequency channel via which the communication unit 206 operates, the communication unit 206 executes communication via a plurality of links.

In a case where the AP 102 complies with an NFC standard, a Bluetooth standard, and the like in addition to the IEEE 802.11be standard, the communication unit 206 may control wireless communication complying with these communication standards. In a case where the AP 102 can execute wireless communication complying with a plurality of communication standards, communication units and antennas that correspond to the respective communication standards may be individually included. Via the communication unit 206, the AP 102 communicates data, such as image data, document data, and video data, with the STAs 103 and 104. The antennas 207, 208, and 209 may be formed separately from the communication unit 206, or may be formed as one module together with the communication unit 206. The antenna 207 is an antenna that can execute communication in the 2.4-GHz band, the 5-GHz band, and the 6-GHz band. While, in the present exemplary embodiment, the AP 102 includes three antennas, the number of antennas is not limited. Alternatively, the AP 102 may include different antennas for the respective frequency bands. In a case where the AP 102 includes a plurality of antenna, the AP 102 may include communication units 206 corresponding to the respective antennas.

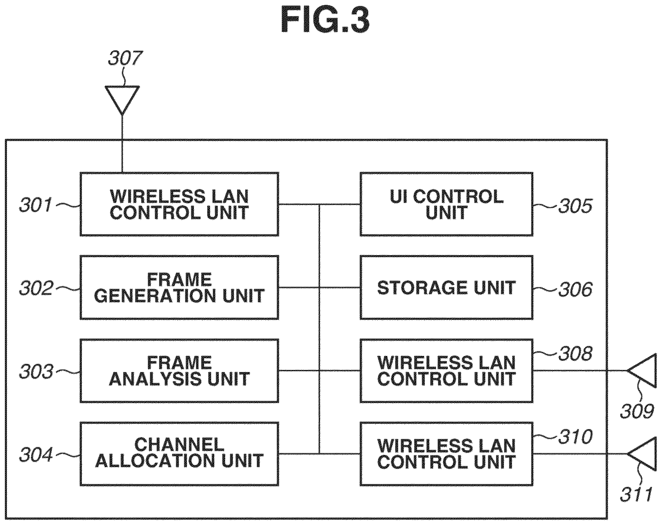

Fig. 3 is a block diagram illustrating a functional configuration of the AP 102 according to the present exemplary embodiment. The STAs 103 and 104 can have a similar configuration. In this example, the AP 100 includes three wireless LAN control units 301, 308, and 310. The number of wireless LAN control units is not limited to three, and may be one or two. Alternatively, the number of wireless LAN control units may be four or more. The AP 100 further includes a frame generation unit 302, a frame analysis unit 303, a channel allocation unit 304, a user interface (UI) control unit 305, a storage unit 306, and wireless antennas 307, 309, and 311.

The wireless LAN control units 301, 308, and 310 each include an antenna and a circuit for transmitting and receiving radio signals to and from a different wireless LAN apparatus, and a program for controlling these. In compliance with the IEEE 802.11 standard series, the wireless LAN control unit 301 executes communication control of a wireless LAN, based on a frame generated by the frame generation unit 302.

The frame generation unit 302 generates a wireless control frame to be transmitted by the wireless LAN control unit 301. In some cases, the frame generated by the frame generation unit 302 can be transmitted by the wireless LAN control unit 308 or 310. Limitations may be imposed on the content of wireless control to be generated by the frame generation unit 302, based on a setting stored in the storage unit 305. Alternatively, the content of the wireless control may be changed based on a user setting received from the UI control unit 304.

The frame analysis unit 303 interprets frames received by the wireless LAN control units 301, 308, and 310 and reflects the content in the wireless LAN control units 301, 308, and 310. Regardless of which control unit receives a frame, the frame is processed by the frame analysis unit 303 once, which allows control to be performed on even a wireless LAN control unit that has not received the frame.

The channel allocation unit 304 performs a determination to appropriately allocate a channel via which an AP and a STA execute communication, in a case where an instruction is issued to execute communication with a communication partner or communication with a STA. In accordance with the allocation determined in this process, communication is executed via a channel via which an AP 105 and a STA 107 execute communication, or a sub channel defined in the channel, for example.

The UI control unit 305 includes hardware related to a user interface, such as a touch panel or a button for receiving, from a user (not illustrated) of the AP, an operation performed on an AP, and a program for controlling these. The UI control unit 304 also has a function for presenting information to the user, such as the display of images or voice output, for example. The storage unit 306 is a storage device that can include a ROM and a RAM that store programs and data for operating an AP.

### [First Exemplary Embodiment]

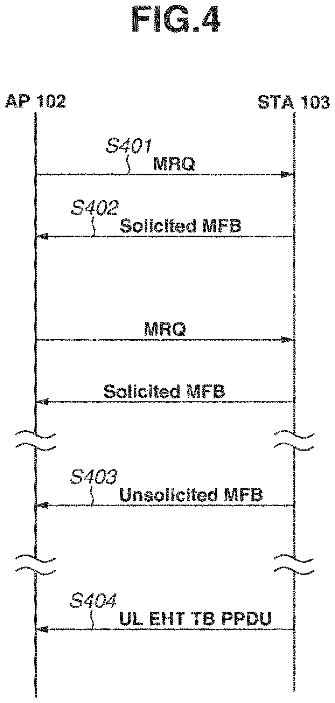

In the present exemplary embodiment, the AP 102 and the STA 103 execute Link Adaptation. Fig. 4 illustrates an example of a sequence procedure that is performed between communication apparatuses 102 and 103 in performing Link Adaptation.

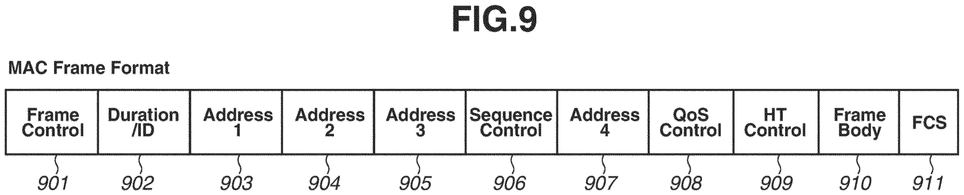

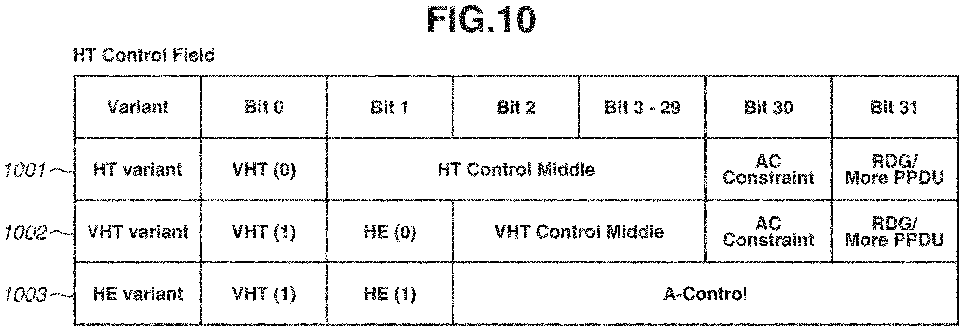

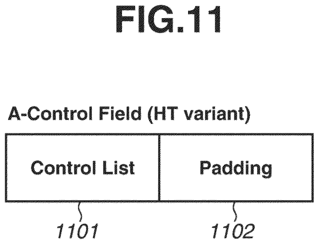

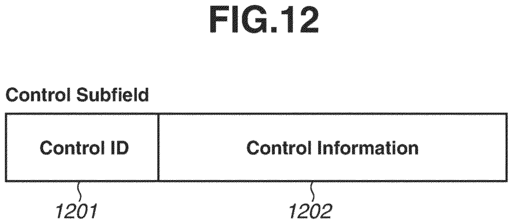

First of all, in step S401, the communication apparatus 102 transmits a modulation and coding scheme request (MRQ) to the communication apparatus 103. Fig. 9 illustrates an example of a media access control (MAC) frame format. The MRQ is transmitted in the form of this MAC frame format. To indicate that a frame to be transmitted is an MRQ, an HT Control field 909 is used. Fig. 10 illustrates an example of the HT Control field, and in the case of indicating an MRQ, an HE Variant 1003 among illustrated variants may be used. This HE Variant includes an A-Control field illustrated in Fig. 11, and furthermore, a Control List field 1101 illustrated in Fig. 11 that is included in the A-Control includes a Control ID field 1201 and a Control Information field 1202 illustrated in Fig. 12.

Table 1 indicates an example of correspondence between field values stored in the Control ID field 1201 and types of the Control Information field 1202 corresponding to the respective field values. Four-bit field values of Control Information are prepared and correspond to 16 pieces of Control Information in total. In the IEEE 802.11ax standard, Control Information is defined in the fields having field values of 0 to 6 and 15, and fields having field values of 7 to 14 are in a Reserved status. In the present invention, Control Information is newly defined in some fields in the Reserved status to adapt to a frequency bandwidth extendable up to 320 MHz in the 802.11be standard.

### [Table 1]

**Table 1**

| Field value | Control Information Type | Length (bits) |
|---|---|---|
| 0 | Triggered response scheduling (TRS) | 26 |
| 1 | Operating mode (OLM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7 | EHT operating mode (EHT OM) | 6 |
| 8 | Single response scheduling (SRS) | 10 |
| 10 | AP assistance request (AAR) | 20 |
| 11 | EHT Link Adaptation for MRQ | 15 |
| 12 | EHT Link Adaptation for MFB | 26 |
| 13 | EHT Link Adaptation for UL EHT TB PPDU MFB | 26 |
| 9, 14 | Reserved | |
| 15 | Ones need expansion surely (ONES) | 26 |

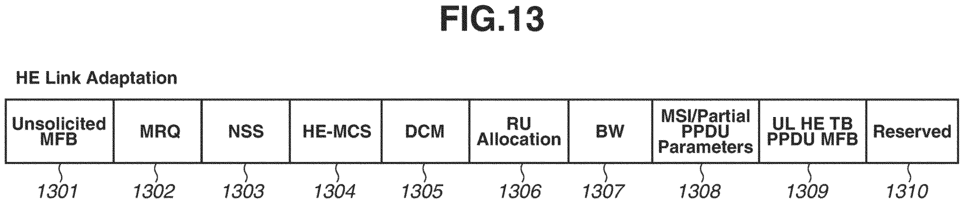

An HE Link Adaptation (HLA) in a field having a field value of 2 is used in the case of executing Link Adaptation in the 11ax. Fig. 13 illustrates a frame format of the HE Link Adaptation. From the head, the HE Link Adaptation includes an Unsolicited MFB subfield 1301, an MRQ subfield 1302, an NSS subfield 1303, an HE-MCS subfield 1304, a DCM subfield 1305, an RU Allocation subfield 1306, a BW subfield 1307, an MSI/Partial physical protocol data unit (PPDU) Parameters subfield 1308, an UL HE TB PPDU MFB subfield 1309, and a Reserved subfield 1310. Table 2 illustrates an example of a frame format of the HE Link Adaptation.

These fields are transmitted by the communication apparatus 102 or 103 in the order, starting from the Unsolicited MFB subfield 1301, illustrated in Fig. 13, and received by a different communication apparatus. In particular, the NSS subfield 1303 may be 3 bits, the RU Allocation subfield 1306 may be 8 bits, and the BW subfield 1307 may be 2 bits.

### [Table 2]

**Table 2**

| Subfield | Number of bits | Definition |
|---|---|---|
| Unsolicited MFB | 1 | If the value is 1, it indicates an Unsolicited MFB, and if the value is 0, it indicates an MRQ or a solicited MFB. |
| MRQ/Extended NSS | 1 | If this value is 1 and the value of the Unsolicited MFB subfield is 0, it indicates an MRQ, and if this value is 0 and the value of the Unsolicited MFB subfield is 0, it indicates a solicited MFB. |
| | | In other cases, this field is reserved. |
| NSS | 3 | If the value of the Unsolicited MFB subfield is 1 and the value of the UL HE TB PPDU MFB subfield is 0, or the value of the Unsolicited MFB subfield is 0 and the value of the MRQ subfield is 0, it indicates the NSS being the recommended number of spatial streams of a PPDU to be transmitted to a STA, and the value is set to NSS-1. |
| | | If the value of the Unsolicited MFB subfield is 1 and the value of the UL HE TB PPDU MFB subfield is 1, it indicates the NSS being the recommended number of spatial streams of an HE TB PPDU to be transmitted from a STA, and the value is set to NSS-1. |
| | | The largest NSS is 8. |
| | | In other cases, this field is reserved. |
| HE-MCS | 4 | If the value of the Unsolicited MFB subfield is 1 and the value of the UL HE TB PPDU MFB subfield is 0, or the value of the Unsolicited MFB subfield is 0 and the value of the MRQ subfield is 0, it indicates a recommended HE-MCS of a PPDU to be transmitted to a STA. |
| | | If the value of the Unsolicited MFB subfield is 1 and the value of the UL HE TB PPDU MFB subfield is 1, it indicates a recommended HE-MCS of an HE TB PPDU to be transmitted from a STA. |
| | | In other cases, this field is reserved. |
| DCM | 1 | If the value of the Unsolicited MFB subfield is 1 and the value of the UL HE TB PPDU MFB subfield is 0, or the value of the Unsolicited MFB subfield is 0 and the value of the MRQ subfield is 0, it indicates a recommended DCM. If this value is 1, a DCM is recommended to be used in a PPDU to be transmitted to a STA, and in other cases, this value is set to 0. |
| | | If the value of the Unsolicited MFB subfield is 1 and the value of the UL HE TB PPDU MFB subfield is 1, it indicates a recommended DCM. If this value is 1, a DCM is recommended to be used in an HE TB PPDU to be transmitted from a STA, and in other cases, this value is set to 0. |
| | | In other cases, this field is reserved. |
| RU Allocation | 8 | If the value of the Unsolicited MFB subfield is 1 and the value of the UL HE TB PPDU MFB subfield is 0, it indicates an RU of a recommended HE-MCS that is applied to a PPDU to be transmitted to a STA. |
| | | If the value of the Unsolicited MFB subfield is 0 and the value of the MRQ subfield is 1, it indicates an RU to be requested to cause an MFB requester to obtain feedback. |
| | | If the value of the Unsolicited MFB subfield is 1 and the value of the UL HE TB PPDU MFB subfield is 1, it indicates an RU of a recommended HE-MCS that is applied to an HE TB PPDU to be transmitted from a STA. |
| | | The RU Allocation subfield is used together with the BW subfield for the determination of an RU. |
| | | In other cases, this field is reserved. |
| BW | 2 | If the value of the Unsolicited MFB subfield is 1 and the value of the UL HE TB PPDU MFB subfield is 0, it indicates a BW of a recommended HE-MCS that is applied to a PPDU to be transmitted to a STA. |
| | | If the value of the Unsolicited MFB subfield is 0 and the value of the MRQ subfield is 1, it indicates a BW to be requested to cause an MFB requester to obtain feedback. |
| | | If the value of the Unsolicited MFB subfield is 1 and the value of the UL HE TB PPDU MFB subfield is 1, it indicates a BW of recommended HE-MCS that is applied to an HE TB PPDU to be transmitted from a STA. |
| | | If the value of the BW is 0, 20 MHz is indicated, if the value of the BW is 1, 40 MHz is indicated, if the value of the BW is 2, 80 MHz is indicated, and if the value of the BW is 3, 160 MHz/80 + 80 MHz is indicated. |
| | | In other cases, this field is reserved. |
| MSI/Partial PPDU Parameters | 3 | If the value of the Unsolicited MFB subfield is 0 and the value of the MRQ subfield is 1, a sequence number in the range from 0 to 6 for identification of a specific HE-MCS feedback request is stored. |
| | | If the value of the Unsolicited MFB subfield is 0 and the value of the MRQ subfield is 0, a sequence number in the range from 0 to 6 in response to the specific requested HE-MCS feedback request is stored. |
| | | If the value of the Unsolicited MFB subfield is 1, it indicates a PPDU Format and a Coding Type. |
| Tx Beamforming | 1 | If the value of the Unsolicited MFB subfield is 1 and the value of the UL HE TB PPDU MFB subfield is 0, it indicates whether a PPDU for which the Unsolicited MFB is estimated has been beamformed. |
| | | If this value is 0, it indicates a non-beamformed PPDU, and if this value is 1, it indicates a beamformed PPDU. |
| | | In other cases, this field is reserved. |
| UL HE TB PPDU MFB | 1 | If this value is 1 when the value of the Unsolicited MFB subfield is 1, NSS, HE-MCS, DCM, BW, and RU |
| | | Allocation fields indicate a recommended MFB for an HE |
| | | TB PPDU to be transmitted from a STA. |
| | | In other cases, this field is reserved. |

Here, in the case of executing Link Adaptation based on the 11be standard, if the HE Link Adaptation is used, information cannot be properly transmitted. While the NSS has been 8 at most in the standards up to 11ax, the NSS becomes 16 at most in the 11be standard, and thus representation requires at least 4 bits. In addition, while a frequency bandwidth has been 160 MHz at most in the standards up to 11ax, the frequency bandwidth is extended up to 320 MHz in the 11be, and thus the RU Allocation requires at least 9 bits and the BW requires at least 3 bits for the representation. Accordingly, in the case of using the HE Link Adaptation, extension of at least 1 bit is performed for each of the NSS, the BW, and the RU Allocation fields, and extension of 3 bits in total is required. Nevertheless, the Control Information 1202 is determined to be 26 bits in the standard, and because the HE Link Adaptation is already 25 bits excluding Reserved, there is no space for extension of 3 bits.

In view of the foregoing, in the present exemplary embodiment, by using an EHT Link Adaptation for MRQ, an EHT Link Adaptation for MFB, and an EHT Link Adaptation for UL EHT TB PPDU MFB, NSS, BW, and RU Allocations are extended without exceeding a 26-bit width which is the total number of bits of Control Information field.

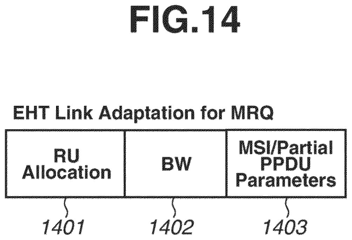

In the present exemplary embodiment, in the transmission of an MRQ, a frame including EHT Link Adaptation for MRQ subfields illustrated in Fig. 14 is transmitted to perform transmission of an MRQ. Setting a value of the Control ID 1201 to a field having a field value of 11 indicated in Table 1 leads to indication that a frame to be transmitted is an EHT Link Adaptation for MRQ.

Fig. 14 illustrates an example of a frame format of an EHT Link Adaptation for MRQ that is communicated by the communication apparatus 102. From the head, the EHT Link Adaptation for MRQ includes an RU Allocation subfield 1401, a BW subfield 1402, and an MSI/Partial PPDU Parameters subfield 1403. Table 3 indicates pieces of information that are stored in respective fields of the EHT Link Adaptation for MRQ.

These fields are transmitted by the communication apparatus 102 in the order, starting from the RU Allocation subfield 1401, illustrated in Fig. 14, and received by a different communication apparatus. The order in which the fields are transmitted and received is not limited to the order illustrated in Fig. 14, and the order of fields may vary. As long as the total number of bits of the entire frame does not exceed 26 bits, a field not illustrated in Fig. 14 may be added between any fields. As indicated in Table 3, because the number of bits of each subfield of the RU Allocation and the BW increases by 1 bit, adaptation to a frequency bandwidth up to 320 MHz is achieved together with adaptation to the allocation of resource units in accordance with the bandwidth. Thus, a frequency band can be designated in the frequency bandwidth up to 320 MHz. Because many fields are set to be Reserved in the case of an MRQ in the conventional HLA Control subfield, the adaptation to the frequency up to 320 MHz can be achieved without decreasing the numbers of bits of subfields.

### [Table 3]

**Table 3**

| Subfield | Number of bits | Definition |
|---|---|---|
| RU Allocation | 9 | It indicates an RU to cause an MFB requester to obtain feedback. |
| | | The RU Allocation subfield is used together with the BW subfield for the determination of an RU. |
| BW | 3 | It indicates a BW to cause an MFB requester to obtain feedback. |
| | | If the value of the BW is 0, 20 MHz is indicated, if the value of the BW is 1, 40 MHz is indicated, if the value of the BW is 2, 80 MHz is indicated, if the value of the BW is 3, 160 MHz/80 + 80 MHz is indicated, and if the value of the BW is 4, 320 MHz/160 + 160 MHz is indicated. |
| MSI/Partial PPDU Parameters | 3 | A sequence number in the range from 0 to 6 for identification of a specific EHT-MCS feedback request is stored. |

Next, in step S402, the communication apparatus 103 serving as a STA transmits a solicited MFB in response to receipt of an MRQ transmitted by the communication apparatus 102. The solicited MFB is transmitted in the form of the MAC frame format illustrated in Fig. 9. In the case of the 11ax standard, in the transmission of an MFB, a MAC frame including the HE Link Adaptation illustrated in Fig. 13 is transmitted to perform transmission of a solicited MFB.

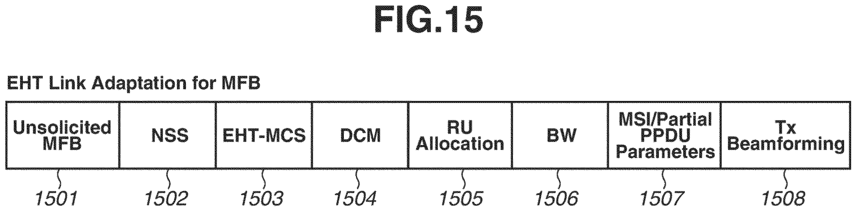

In the present exemplary embodiment, in the transmission of an MFB, a MAC frame including EHT Link Adaptation for MFB subfields illustrated in Fig. 15 is transmitted to perform the transmission of a solicited MFB. Setting a value of the Control ID 1201 to a field having a field value of 12 indicated in Table 1 leads to indication that the frame is an EHT Link Adaptation for MFB.

Fig. 15 illustrates an example of a frame format of an EHT Link Adaptation for MFB that is communicated by the communication apparatus 102. From the head, the EHT Link Adaptation for MFB includes an Unsolicited MFB subfield 1501, an NSS subfield 1502, an EHT-MCS subfield 1503, a DCM subfield 1504, an RU Allocation subfield 1505, a BW subfield 1506, an MSI/Partial PPDU Parameters subfield 1507, and a Tx Beamforming subfield 1508. Table 4 indicates pieces of information that are stored in respective fields of the EHT Link Adaptation for MFB.

These fields are transmitted by the communication apparatus 103 in the order, starting from the unsolicited MFB subfield, illustrated in Fig. 15, and received by a different communication apparatus. The order in which the fields are transmitted and received is not limited to the order illustrated in Fig. 15, and the order of fields may vary. Any field may be omitted, and as long as the total number of bits of the entire frame does not exceed 26 bits, a field not illustrated in Fig. 15 may be added between any fields. The NSS indicates the Number of Spational Streams, i.e., the number of spatial streams to be used. As indicated in Table 4, because the number of bits of each subfield of the RU Allocation and the BW and the NSS increases by 1 bit, adaptation to a frequency bandwidth up to 320 MHz is achieved together with adaptation to the allocation of resource units and an increase in NSS in accordance with the bandwidth. Also, in the EHT Link Adaptation for MFB, a frequency bandwidth up to 320 MHz can be designated in a MAC frame. Two bits in total corresponding to an MRQ and an UL HE TB PPDU MFB can be saved from the conventional HLA Control subfield. Because 3 bits are saved in total, 1 bit is allocated to each subfield of the NSS, the RU Allocation, and the BW in the frame format, which is indicated in Table 4.

### [Table 4]

**Table 4**

| Subfield | Number of bits | Definition |
|---|---|---|
| Unsolicited MFB | 1 | If the value is 1, it indicates an Unsolicited MFB, and if the value is 0, it indicates a solicited MFB. |
| NSS | 4 | It indicates the NSS being the recommended number of spatial streams of a PPDU to be transmitted to a STA, and the value is set to NSS-1. |
| EHT-MCS | 4 | It indicates a recommended EHT-MCS of a PPDU to be transmitted to a STA. |
| DCM | 1 | It indicates a recommended DCM. If this value is 1, a DCM is recommended to be used in a PPDU to be transmitted to a STA, and in other cases, this value is set to 0. |
| RU Allocation | 9 | If the value of the Unsolicited MFB subfield is 1, it indicates an RU of a recommended EHT-MCS that is applied to a PPDU to be transmitted to a STA. |
| | | In other cases, this field is reserved. |
| BW | 3 | If the value of the Unsolicited MFB subfield is 1, it indicates a BW of a recommended EHT-MCS that is applied to a PPDU to be transmitted to a STA. |
| | | If the value of the BW is 0, 20 MHz is indicated, if the value of the BW is 1, 40 MHz is indicated, if the value of the BW is 2, 80 MHz is indicated, if the value of the BW is 3, 160 MHz/80 + 80 MHz is indicated, and if the value of the BW is 4, 320 MHz/160 + 160 MHz is indicated. |
| | | In other cases, this field is reserved. |
| MSI/Partial PPDU Parameters | 3 | If the value of the Unsolicited MFB subfield is 0, a sequence number in the range from 0 to 6 in response to a specific requested EHT-MCS feedback request is stored. |
| | | If the value of the Unsolicited MFB subfield is 1, it indicates a PPDU Format and a Coding Type. |
| Tx Beamforming | 1 | If the value of the Unsolicited MFB subfield is 1, it indicates whether a PPDU for which the Unsolicited MFB is estimated has been beamformed. |
| | | If this value is 0, it indicates a non-beamformed PPDU, and if this value is 1, it indicates a beamformed PPDU. |
| | | In other cases, this field is reserved. |

In the case of transmitting a solicited MFB, the communication apparatus 103 sets the value of the Unsolicited MFB 1501 to a value of 0. By transmitting an MRQ 401 and a solicited MFB 402, the communication apparatus 102 and the communication apparatus 103 execute Link Adaptation. The transmission of the MRQ 401 and the solicited MFB 402 may be executed any number of times. In the present exemplary embodiment, the communication apparatus 102 transmits an MRQ and the communication apparatus 103 transmits a solicited MFB, but the configuration is not limited to this.

Execution of Link Adaptation is not always performed in response to receipt of an MRQ transmitted by the communication apparatus 102, and the communication apparatus 103 can execute Link Adaptation also by transmitting an unsolicited MFB 403. The unsolicited MFB is transmitted in the form of the MAC frame format illustrated in Fig. 9. In the case of the 11ax standard, in the transmission of an MFB, a MAC frame including the HE Link Adaptation illustrated in Fig. 13 is transmitted to perform the transmission of a solicited MFB is performed.

In the present exemplary embodiment, in the transmission of an unsolicited MFB, a MAC frame including the EHT Link Adaptation for MFB subfields illustrated in Fig. 15 is transmitted to perform transmission of an MFB. Setting a value of the Control ID 1201 to the field having the field value of 12 indicated in Table 1leads to indication that the frame is an EHT Link Adaptation for MFB.

In the case of transmitting a solicited MFB, the communication apparatus 103 sets the value of the Unsolicited MFB 1501 to a value of 1. In the present exemplary embodiment, a communication apparatus 10 or the communication apparatus 103 transmits an Unsolicited MFB, but the configuration is not limited to this. Execution of Link Adaptation is not always performed in response to receipt of an MRQ transmitted by the communication apparatus 102, and the communication apparatus 103 can execute Link Adaptation in transmission of a trigger frame by transmitting an UL EHT TB PPDU MFB 404. The UL EHT TB PPDU MFB 404 is transmitted in the form of the MAC frame format illustrated in Fig. 9. In the case of the 1 1ax standard, in the transmission of an MFB, a MAC frame including the HE Link Adaptation illustrated in Fig. 13 is transmitted, to perform transmission of an UL HE TB PPDU MFB that corresponds to an UL EHT TB PPDU MFB in the 11be standard is performed.

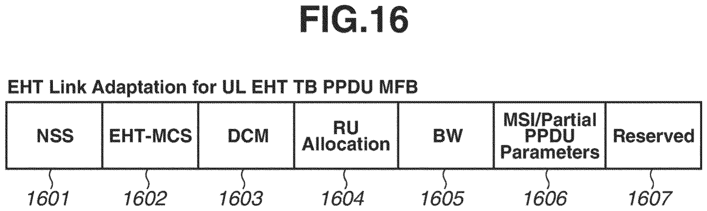

In the present exemplary embodiment, transmission of the UL EHT TB PPDU MFB 404 is performed by transmitting a MAC frame including EHT Link Adaptation for UL EHT TB PPDU MFB subfields illustrated in Fig. 16. Setting a value of the Control ID 1201 to a field having a field value of 13 indicated in Table 1 leads to indication that the frame is an EHT Link Adaptation for UL EHT TB PPDU MFB.

Fig. 16 illustrates an example of a frame format of an EHT Link Adaptation for UL EHT TB PPDU MFB that is communicated by the communication apparatus 103. From the head, the EHT Link Adaptation for UL EHT TB PPDU MFB includes an NSS subfield 1601, an EHT-MCS subfield 1602, a DCM subfield 1603, an RU Allocation subfield 1604, a BW subfield 1605, an MSI/Partial PPDU Parameters subfield 1606, and a Reserved subfield 1607. Table 5 indicates pieces of information that are stored in respective fields of the EHT Link Adaptation for UL EHT TB PPDU MFB.

These fields are transmitted by the communication apparatus 103 in the order, starting from the NSS, illustrated in Fig. 16, and received by a different communication apparatus. The order in which the fields are transmitted and received is not limited to the order illustrated in Fig. 16, and the order of fields may vary. Any field may be omitted, and as long as the total number of bits of the entire frame does not exceed 26 bits, a field not illustrated in Fig. 16 may be added between any fields. As indicated in Table 5, because the number of bits of each subfield of the RU Allocation and the BW and the NSS increases by 1 bit, adaptation to a frequency bandwidth up to 320 MHz is achieved together with adaptation to the allocation of resource units and an increase in NSS in accordance with the bandwidth. Also, in the EHT Link Adaptation for UL EHT TB PPDU MFB, a frequency bandwidth up to 320 MHz can be designated in a MAC frame. Because some subfields are set to be Reserved in the case of an UL HE TB PPDU MFB in the conventional HLA Control subfield, if the subfields are excluded, 320 MHz extension can be represented by 26 bits.

### [Table 5]

**Table 5**

| Subfield | Number of bits | Definition |
|---|---|---|
| NSS | 4 | It indicates the NSS being the recommended number of spatial streams of a PPDU to be transmitted to a STA, and the value is set to NSS-1. |
| | | In other cases, this field is reserved. |
| EHT-MCS | 4 | It indicates a recommended EHT-MCS of a PPDU to be transmitted to a STA. |
| | | In other cases, this field is reserved. |
| DCM | 1 | It indicates a recommended DCM. If this value is 1, a DCM is recommended to be used in a PPDU to be transmitted to a STA, and in other cases, this value is set to 0. |
| RU Allocation | 9 | It indicates an RU of a recommended EHT-MCS that is applied to an EHT TB PPDU. |
| BW | 3 | If the value of the BW is 0, 20 MHz is indicated, if the value of the BW is 1, 40 MHz is indicated, if the value of the BW is 2, 80 MHz is indicated, if the value of the BW is 3, 160 MHz/80 + 80 MHz is indicated, and if the value of the BW is 4, 320 MHz/160 + 160 MHz is indicated. |
| | | In other cases, this field is reserved. |
| MSI/Partial PPDU Parameters | 3 | It indicates a PPDU Format and a Coding Type. |
| Reserved | 2 | reserved. |

In a case where the communication apparatus 102 that has received the EHT Link Adaptation for UL EHT TB PPDU MFB transmitted by the communication apparatus 103 transmits a trigger frame thereafter, the communication apparatus 102 transmits a trigger frame to the communication apparatus 103 with reference to a communication parameter designated by the EHT Link Adaptation for UL EHT TB PPDU MFB transmitted by the communication apparatus 103.

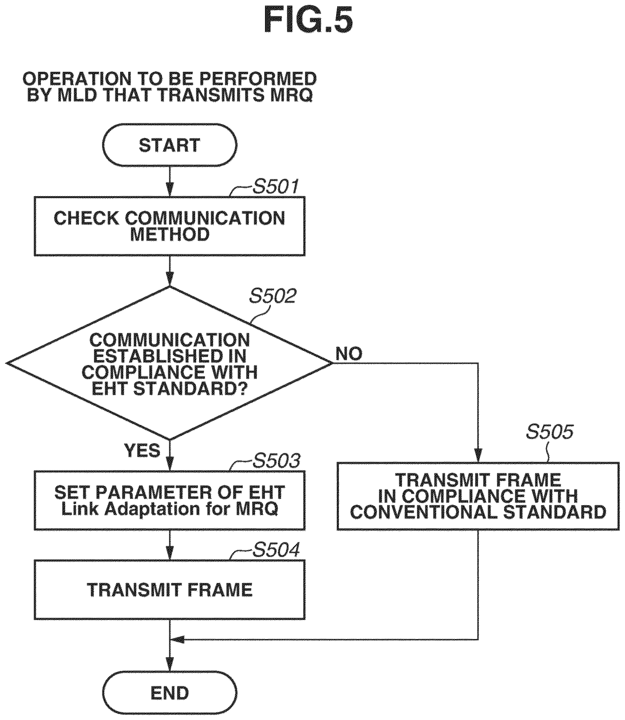

Figs. 5 to 8 illustrate operations to be performed by a communication apparatus when an MRQ, a solicited MFB, an unsolicited MFB, and an UL EHT TB PPDU MFB are transmitted. As an example, the following description will be given of a case where the communication apparatus 102 transmits an MRQ to the communication apparatus 103, and the communication apparatus 103 transmits a solicited MFB, an unsolicited MFB, and an UL EHT TB PPDU MFB to the communication apparatus 102, but the configuration is not limited to this in practice.

Fig. 5 illustrates an operation that is performed by the communication apparatus 102 in transmission of an MRQ. In step S501, the communication apparatus 102 checks an RU Allocation, a BW, and a MSI for a communication with the communication apparatus 103. After that, in step S502, in a case where the communication apparatus 102 and the communication apparatus 103 are connected in compliance with an EHT standard, it is determined that an EHT Link Adaptation for MRQ is to be transmitted, and in step S503, values of the fields in Fig. 14 are set, and in step S504, a MAC frame is transmitted. In step S502, in a case where the communication apparatus 102 and the communication apparatus 103 are not connected in compliance with an EHT standard, a frame is transmitted in compliance with a conventional standard in step S505.

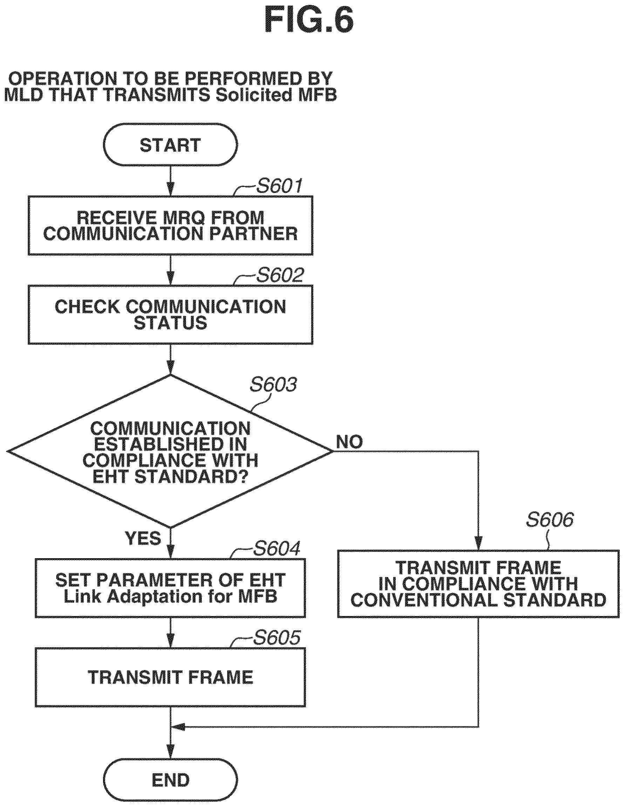

Fig. 6 illustrates an operation that is performed by the communication apparatus 103 in transmission of a solicited MFB. First of all, in step S601, the communication apparatus 103 receives an MRQ transmitted by the communication apparatus 102. Then, in step S602, the communication apparatus 103 checks the communication quality of communication with the communication apparatus 102. After that, in step S603, in a case where the communication apparatus 102 and the communication apparatus 103 are connected in compliance with an EHT standard, it is determined that an EHT Link Adaptation for MFB is to be transmitted, and in step S604, values of the fields in Fig. 15 are set based on the checked communication quality, and in step S605, a MAC frame is transmitted. In step S603, in a case where the communication apparatus 102 and the communication apparatus 103 are not connected in compliance with an EHT standard, a frame is transmitted in compliance with a conventional standard in step S606.

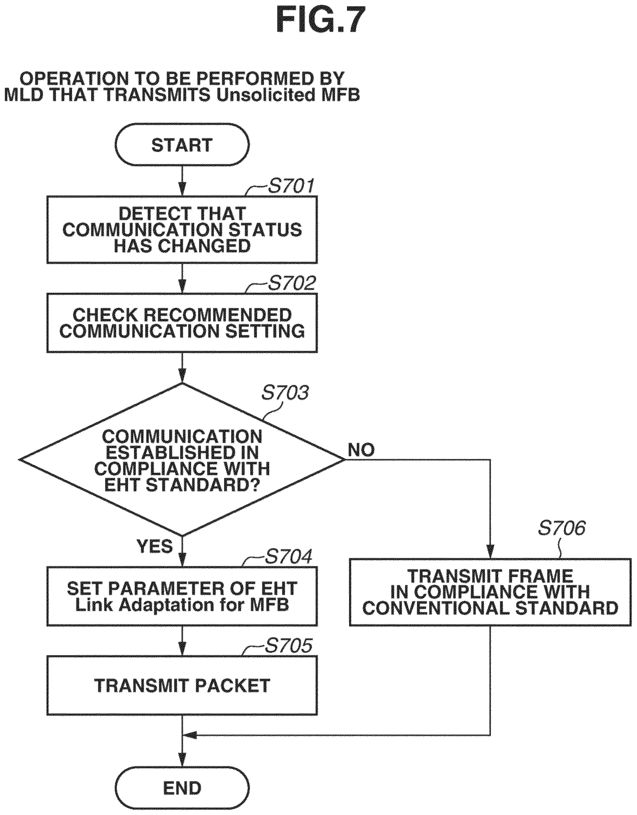

Fig. 7 illustrates an operation that is performed by the communication apparatus 103 in transmission of an unsolicited MFB. First of all, in step S701, the communication apparatus 103 detects that the communication quality of communication with the communication apparatus 102 has deteriorated. Then, in step S702, the communication apparatus 103 checks a recommended communication setting of communication with the communication apparatus 102.

After that, in step S703, in a case where the communication apparatus 102 and the communication apparatus 103 are connected in compliance with an EHT standard, it is determined that an EHT Link Adaptation for MFB is to be transmitted, and in step S704, values of the fields in Fig. 15 are set based on the checked communication quality, and in step S705, a MAC frame is transmitted. In step S703, in a case where the communication apparatus 102 and the communication apparatus 103 are not connected in compliance with an EHT standard, a frame is transmitted in compliance with a conventional standard in step S706.

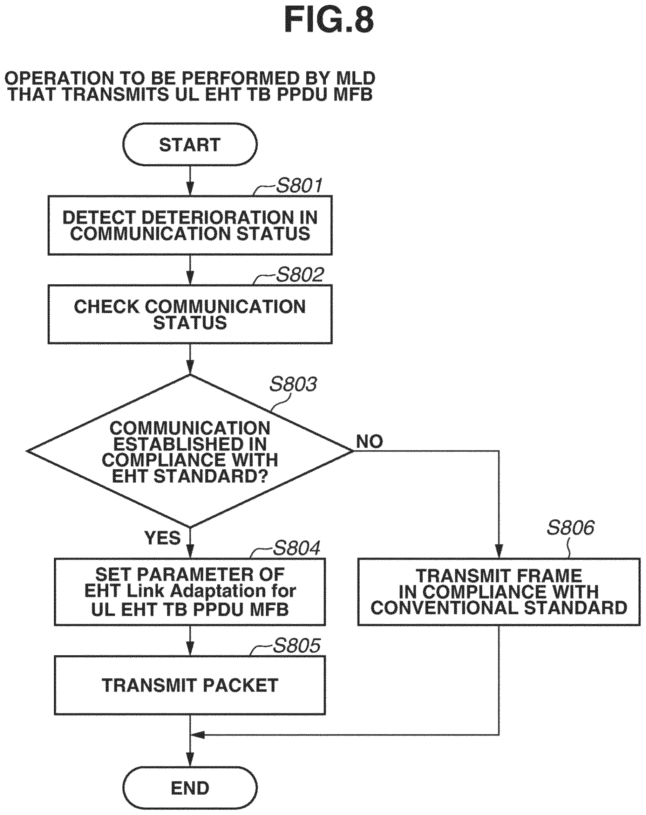

Fig. 8 illustrates an operation that is performed by the communication apparatus 103 in transmission of an UL EHT TB PPDU MFB. First of all, in step S801, the communication apparatus 103 detects that the communication quality of communication with the communication apparatus 102 has deteriorated. Then, in step S802, the communication apparatus 103 checks a recommended communication setting of communication with the communication apparatus 102. After that, in step S803, in a case where the communication apparatus 102 and the communication apparatus 103 are connected in compliance with an EHT standard, it is determined that an EHT Link Adaptation for UL EHT TB PPDU MFB is to be transmitted, and in step S804, values of the fields in Fig. 16 are set based on the checked communication quality, and in step S805, a MAC frame is transmitted. In step S803, in a case where the communication apparatus 102 and the communication apparatus 103 are not connected in compliance with an EHT standard, a frame is transmitted in compliance with a conventional standard in step S806.

As described above, according to the first exemplary embodiment, the extension of representation of a parameter in accordance with the extension of a frequency bandwidth is able to be performed within a field size upper limit of a standard in execution of Link Adaptation in a wireless LAN complying with the IEEE 802.11. In a case where a counterpart apparatus serving as a communication partner complies with an EHT standard, for example, the number of bits of a frame format of a MAC frame to be used in Link Adaptation is adjusted, and 320 MHz being a bandwidth wider than a predetermined bandwidth is designated in the MAC frame, whereby Link Adaptation adapted to a wider bandwidth is executable.

### [Second Exemplary Embodiment]

In the first exemplary embodiment, the description has been given of an example in which, in a case where the communication apparatus 102 and the communication apparatus 103 transmit an MRQ, a solicited MFB, and an unsolicited MFB, a MAC frame is transmitted using an EHT Link Adaptation for MRQ and an EHT Link Adaptation for MFB.

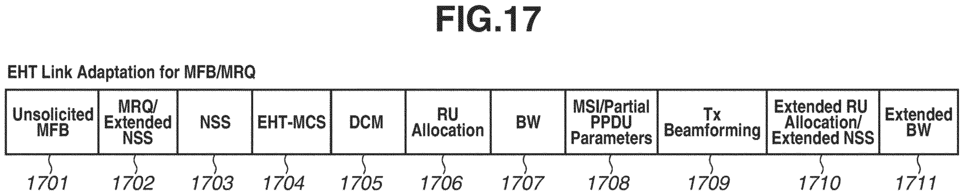

In the present exemplary embodiment, a description will be given of an example in which the communication apparatus 102 and the communication apparatus 103 transmit an MRQ, a solicited MFB, and an unsolicited MFB using an EHT Link Adaptation for MFB/MRQ illustrated in Fig. 17.

Table 6 indicates an example of correspondence between field values stored in the Control ID field 1201 according to the present exemplary embodiment and types of the Control Information field 1202 corresponding to the respective field values.

### [Table 6]

**Table 6**

| Field value | Control Information Type | Length (bits) |
|---|---|---|
| 0 | Triggered response scheduling (TRS) | 26 |
| 1 | Operating mode (OLM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7 | EHT operating mode (EHT OM) | 6 |
| 8 | Single response scheduling (SRS) | 10 |
| 10 | AP assistance request (AAR) | 20 |
| 11 | EHT Link Adaptation for MFB/MRQ | 26 |
| 12 | EHT Link Adaptation for UL EHT TB PPDU MFB | 26 |
| 9, 13, 14 | Reserved | |
| 15 | Ones need expansion surely (ONES) | 26 |

First of all, the communication apparatus 102 transmits an MRQ to the communication apparatus 103. In the first exemplary embodiment, in a case where the communication apparatus 102 transmits the MRQ 401 to the communication apparatus 103, a MAC frame including the EHT Link Adaptation for MRQ illustrated in Fig. 14 is transmitted. In the present exemplary embodiment, a MAC frame including an EHT Link Adaptation for MFB/MRQ is transmitted. Fig. 17 illustrates an example of a frame format of an EHT Link Adaptation for MFB/MRQ that is communicated by the communication apparatus 102.

From the head, the EHT Link Adaptation for MFB/MRQ includes an unsolicited MFB subfield 1701, an MRQ/Extended NSS subfield 1702, an NSS subfield 1703, an EHT-MCS subfield 1704, a DCM subfield 1705, an RU Allocation subfield 1706, a BW subfield 1707, an MSI/Partial PPDU Parameters subfield 1708, a Tx Beamforming subfield 1709, an Extended RU Allocation/Extended NSS subfield 1710, and an Extended BW subfield 1711. Table 7 indicates pieces of information that are stored in respective fields of the EHT Link Adaptation for MFB/MRQ.

These fields are transmitted by the communication apparatus 102 in the order, starting from the Unsolicited MFB, illustrated in Fig. 17, and received by a different communication apparatus. The order in which the fields are transmitted and received is not limited to the order illustrated in Fig. 17, and the order of fields may vary.

### [Table 7]

**Table 7**

| Subfield | Number of bits | Definition |
|---|---|---|
| Unsolicited MFB | 1 | If the value is 1, it indicates an Unsolicited MFB, and if the value is 0, it indicates an MRQ or a solicited MFB . |
| MRQ/Extended NSS | 1 | If this value is 1 and the value of the Unsolicited MFB subfield is 0, it indicates an MRQ, if this value is 0 and the value of the Unsolicited MFB subfield is 0, it indicates a solicited MFB, and if the value of the Unsolicited MFB subfield is 1, it indicates a value of the NSS together with the NSS field. |
| NSS | 3 | If the value of the Unsolicited MFB subfield is 1, or the value of the Unsolicited MFB subfield is 0 and the value of the MRQ/Extended NSS subfield is 0, it indicates the NSS being the recommended number of spatial streams of a PPDU to be transmitted to a STA, and the value is set to NSS-1. |
| | | In other cases, this field is reserved. |
| EHT-MCS | 4 | If the value of the Unsolicited MFB subfield is 1, or the value of the Unsolicited MFB subfield is 0 and the value of the MRQ/Extended NSS subfield is 0, it indicates a recommended EHT-MCS of a PPDU to be transmitted to a STA. |
| | | In other cases, this field is reserved. |
| DCM | 1 | If the value of the Unsolicited MFB subfield is 1, or the value of the Unsolicited MFB subfield is 0 and the value of the MRQ/Extended NSS subfield is 0, it indicates a recommended DCM. If this value is 1, a DCM is recommended to be used in a PPDU to be transmitted to a STA, and in other cases, this value is set to 0. |
| | | In other cases, this field is reserved. |
| RU Allocation | 8 | If the value of the Unsolicited MFB subfield is 1, it indicates an RU of a recommended EHT-MCS that is applied to a PPDU to be transmitted to a STA. |
| | | If the value of the Unsolicited MFB subfield is 0 and the value of the MRQ/Extended NSS subfield is 1, it indicates an RU to cause an MFB requester to obtain feedback. |
| | | The RU Allocation subfield is used together with the BW subfield for the determination of an RU. |
| | | In other cases, this field is reserved. |
| BW | 2 | If the value of the Unsolicited MFB subfield is 1, it indicates a BW of a recommended EHT-MCS that is applied to a PPDU to be transmitted to a STA. |
| | | If the value of the Unsolicited MFB subfield is 0 and the value of the MRQ/Extended NSS subfield is 1, it indicates a BW to cause an MFB requester to obtain feedback. |
| | | It represents a BW together with an Extended BW field. |
| | | If the value of the BW is 0, 20 MHz is indicated, if the value of the BW is 1, 40 MHz is indicated, if the value of the BW is 2, 80 MHz is indicated, if the value of the BW is 3, 160 MHz/80 + 80 MHz is indicated, and if the value of the BW is 4, 320 MHz/160 + 160 MHz is indicated. |
| | | In other cases, this field is reserved. |
| MSI/Partial PPDU Parameters | 3 | If the value of the Unsolicited MFB subfield is 0 and the value of the MRQ/Extended NSS subfield is 1, a sequence number in the range from 0 to 6 for identification of a specific EHT-MCS feedback request is stored. |
| | | If the value of the Unsolicited MFB subfield is 0 and the value of the MRQ/Extended NSS subfield is 0, a sequence number in the range from 0 to 6 in response to the specific requested EHT-MCS feedback request is stored. |
| | | If the value of the Unsolicited MFB subfield is 1, it indicates a PPDU Format and a Coding Type. |
| Tx Beamforming | 1 | If the value of the Unsolicited MFB subfield is 1, it indicates whether a PPDU for which the Unsolicited MFB is estimated has been beamformed. |
| | | If this value is 0, it indicates a non-beamformed PPDU, and if this value is 1, it indicates a beamformed PPDU. |
| | | In other cases, this field is reserved. |
| Extended RU Allocation/Extended NSS | 1 | If the value of the Unsolicited MFB subfield is 1, or the value of the Unsolicited MFB subfield is 0 and the value of the MRQ/Extended NSS subfield is 1, it represents RU Allocation together with RU Allocation. |
| | | If the value of the Unsolicited MFB subfield is 0 and the value of the MRQ/Extended NSS subfield is 0, it represents the NSS together with the NSS. |
| | | In other cases, this field is reserved. |
| Extended BW | 1 | If the value of the Unsolicited MFB subfield is 1, or the value of the Unsolicited MFB subfield is 0 and the value of the MRQ/Extended NSS subfield is 1, it represents a BW together with a BW subfield. |
| | | In other cases, this field is reserved. |

In the case of transmitting an MRQ, the communication apparatus 102 sets the value of the Unsolicited MFB 1701 in Fig. 17 to a value of 0, and the value of the MRQ/Extended NSS 1702 to a value of 1. Next, in step S402, the communication apparatus 103 serving as a STA transmits a solicited MFB in response to receipt of an MRQ transmitted by the communication apparatus 102. In the present exemplary embodiment, transmission of an MFB is performed by transmitting a MAC frame including the EHT Link Adaptation for MFB/MRQ illustrated in Fig. 17. In the case of transmitting a solicited MFB, the communication apparatus 103 sets the value of the Unsolicited MFB 1701 in Fig. 17 to a value of 0, and the value of the MRQ/Extended NSS 1702 to a value of 0.

Execution of Link Adaptation is not always performed in response to receipt of an MRQ transmitted by the communication apparatus 102, and the communication apparatus 103 can execute Link Adaptation also in response to transmission of an unsolicited MFB in step S403. In the present exemplary embodiment, transmission of an unsolicited MFB is performed by transmitting a MAC frame including the EHT Link Adaptation for MFB/MRQ illustrated in Fig. 17. In the case of transmitting an unsolicited MFB, the communication apparatus 103 sets the value of the Unsolicited MFB 1701 in Fig. 17 to a value of 1.

Further, execution of Link Adaptation is not always performed in response to receipt of an MRQ transmitted by the communication apparatus 102, and the communication apparatus 103 can execute Link Adaptation in transmission of a trigger frame in response to transmission of an UL EHT TB PPDU MFB in step S404. In the present exemplary embodiment, in the transmission of an UL EHT TB PPDU MFB, a MAC frame including EHT Link Adaptation for UL EHT TB PPDU MFB subfields illustrated in Fig. 16 is transmitted, to perform transmission of an UL EHT TB PPDU MFB.

In a case where the communication apparatus 102 that has received the EHT Link Adaptation for UL EHT TB PPDU MFB transmitted by the communication apparatus 103 transmits a trigger frame thereafter, the communication apparatus 102 transmits a trigger frame to the communication apparatus 103 with reference to a communication parameter designated by the EHT Link Adaptation for UL EHT TB PPDU MFB transmitted by the communication apparatus 103.

As described above, according to the second exemplary embodiment, by preparing a MAC frame including an EHT Link Adaptation for MFB/MRQ, the number of types of Control Information can be reduced. This leads to savings in resources for future standard formulation, in consideration of an increase in Control Information.

### [Third Exemplary Embodiment]

In the second exemplary embodiment, the description has been given of an example in which, in a case where the communication apparatus 102 and the communication apparatus 103 transmit an MRQ, a solicited MFB, and an unsolicited MFB, a MAC frame is transmitted using an EHT Link Adaptation for MFB/MRQ.

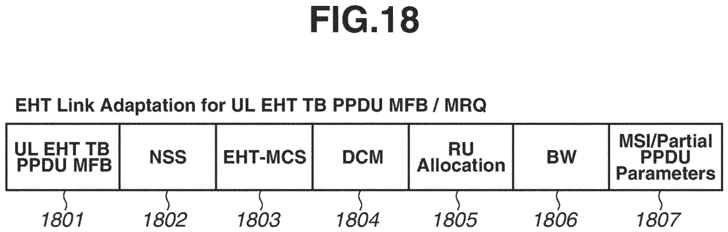

In the present exemplary embodiment, the description will be given of an example in which the communication apparatus 102 and the communication apparatus 103 transmit an MRQ and an UL EHT TB PPDU MFB using an EHT Link Adaptation for UL EHT TB PPDU MFB/MRQ illustrated in Fig. 18.

Table 8 indicates an example of correspondence between field values stored in the Control ID field 1201 according to the present exemplary embodiment and types of the Control Information field 1202 corresponding to the respective field values.

### [Table 8]

**Table 8**

| Field value | Control Information Type | Length (bits) |
|---|---|---|
| 0 | Triggered response scheduling (TRS) | 26 |
| 1 | Operating mode (OLM) | 12 |
| 2 | HE link adaptation (HLA) | 26 |
| 3 | Buffer status report (BSR) | 26 |
| 4 | UL power headroom (UPH) | 8 |
| | | |
| 5 | Bandwidth query report (BQR) | 10 |
| 6 | Command and status (CAS) | 8 |
| 7 | EHT operating mode (EHT OM) | 6 |
| 8 | Single response scheduling (SRS) | 10 |
| 10 | AP assistance request (AAR) | 20 |
| 11 | EHT Link Adaptation for UL EHT TB PPDU MFB/MRQ | 26 |
| 12 | EHT Link Adaptation for MFB | 26 |
| 9, 13, 14 | Reserved | |
| 15 | Ones need expansion surely (ONES) | 26 |

First of all, the communication apparatus 102transmits an MRQ to the communication apparatus 103. In the first exemplary embodiment, in a case where the communication apparatus 102 transmits the MRQ 401 to the communication apparatus 103, a MAC frame including the EHT Link Adaptation for MRQ illustrated in Fig. 14 is transmitted. In the present exemplary embodiment, a MAC frame including an EHT Link Adaptation for UL EHT TB PPDU MFB/MRQ is transmitted. Fig. 18 illustrates an example of a frame format of an EHT Link Adaptation for UL EHT TB PPDU MFB/MRQ that is communicated by the communication apparatus 102.

From the head, the EHT Link Adaptation for MFB/MRQ includes an UL EHT TB PPDU MFB subfield 1801, an NSS subfield 1802, an EHT-MCS subfield 1803, a DCM subfield 1804, an RU Allocation subfield 1805, a BW subfield 1806, and an MSI/Partial PPDU Parameters subfield 1807. Table 9 indicates pieces of information that are stored in respective fields of the EHT Link Adaptation for MFB/MRQ.

These fields are transmitted by the communication apparatus 102 in the order, starting from the UL EHT TB PPDU MFB 1801, illustrated in Fig. 18, and received by a different communication apparatus. The order in which the fields are transmitted and received is not limited to the order illustrated in Fig. 18, and the order of fields may vary.

### [Table 9]

**Table 9**

| Subfield | Number of bits | Definition |
|---|---|---|
| UL EHT TB PPDU MFB | 1 | If the value is 1, it indicates UL EHT TB PPDU MFB, and if the value is 0, it indicates an MRQ. |
| NSS | 4 | If the value of the UL EHT TB PPDU MFB subfield is 1, it indicates the NSS being the recommended number of spatial streams of a PPDU to be transmitted to a STA, and the value is set to NSS-1. |
| | | In other cases, this field is reserved. |
| EHT-MCS | 4 | If the value of the UL EHT TB PPDU MFB subfield is 1, it indicates a recommended EHT-MCS of a PPDU to be transmitted to a STA. |
| | | In other cases, this field is reserved. |
| DCM | 1 | If the value of the UL EHT TB PPDU MFB subfield is 1, it indicates a recommended DCM. If this value is 1, a DCM is recommended to be used in an UL EHT TB PPDU to be transmitted to a STA, and in other cases, this value is set to 0. |
| | | In other cases, this field is reserved. |
| RU Allocation | 9 | If the value of the UL EHT TB PPDU MFB subfield is 1, it indicates an RU of a recommended EHT-MCS that is applied to a PPDU to be transmitted to a STA. |
| | | If the value of the UL EHT TB PPDU MFB subfield is 0, it indicates an RU to cause an MFB requester to obtain feedback. |
| | | The RU Allocation subfield is used together with the BW subfield for determination of an RU. |
| | | In other cases, this field is reserved. |
| BW | 3 | If the value of the UL EHT TB PPDU MFB subfield is 1, it indicates a BW of a recommended EHT-MCS that is applied to a PPDU to be transmitted to a STA. |
| | | If the value of the UL EHT TB PPDU MFB subfield is 0, it indicates a BW to cause an MFB requester to obtain feedback. |
| | | If the value of the BW is 0, 20 MHz is indicated, if the value of the BW is 1, 40 MHz is indicated, if the value of the BW is 2, 80 MHz is indicated, if the value of the BW is 3, 160 MHz/80 + 80 MHz is indicated, and if the value of the BW is 4, 320 MHz/160 + 160 MHz is indicated. |
| | | In other cases, this field is reserved. |
| MSI/Partial PPDU Parameters | 3 | If the value of the UL EHT TB PPDU MFB subfield is 0, a sequence number in the range from 0 to 6 for identification of a specific EHT-MCS feedback request is stored. |
| | | If the value of the UL EHT TB PPDU MFB subfield is 1, it indicates a PPDU Format and a Coding Type. |

In the case of transmitting an MRQ, the communication apparatus 102 sets the value of the UL EHT TB PPDU MFB subfield in Fig. 18 to a value of 0. Next, the communication apparatus 103 serving as a STA transmits a solicited MFB in response to receipt of an MRQ transmitted by the communication apparatus 102 in step S402. In the present exemplary embodiment, the transmission of an MFB is performed by transmitting a MAC frame including the EHT Link Adaptation for MFB illustrated in Fig. 15. Because the processing in which the communication apparatus 103 transmits a solicited MFB is similar to that in the first exemplary embodiment, the description will be omitted.

Execution of Link Adaptation is not always performed in response to receipt of an MRQ transmitted by the communication apparatus 102, and the communication apparatus 103 can execute Link Adaptation also by transmitting an unsolicited MFB in step S403. In the present exemplary embodiment, transmission of an unsolicited MFB is performed by transmitting a MAC frame including the EHT Link Adaptation for MFB illustrated in Fig. 15. Because the processing in which the communication apparatus 103 transmits an unsolicited MFB is similar to that in the first exemplary embodiment, the description will be omitted.

Further, execution of Link Adaptation is not always performed in response to receipt of an MRQ transmitted by the communication apparatus 102, the communication apparatus 103 can execute Link Adaptation in transmission of a trigger frame by transmitting an UL EHT TB PPDU MFB in step S404. In the present exemplary embodiment, in the transmission of an UL EHT TB PPDU MFB, a MAC frame including EHT Link Adaptation for UL EHT TB PPDU MFB/MRQ subfields illustrated in Fig. 18 is transmitted to perform transmission of an UL EHT TB PPDU MFB. In the case of transmitting an UL EHT TB PPDU MFB, the communication apparatus 103 sets the value of the UL EHT TB PPDU MFB subfield in Fig. 18 to a value of 1.

In a case where the communication apparatus 102 that has received the EHT Link Adaptation for UL EHT TB PPDU MFB/MRQ transmitted by the communication apparatus 103 transmits a trigger frame thereafter, the communication apparatus 102 transmits a trigger frame to the communication apparatus 103 with reference to a communication parameter designated by the EHT Link Adaptation for UL EHT TB PPDU MFB/MRQ transmitted by the communication apparatus 103.

As described above, according to the third exemplary embodiment, with a MAC frame including an EHT Link Adaptation for UL EHT TB PPDU MFB/MRQ, the number of types of Control Information can be reduced. This leads to savings in resources for future standard formulation, in consideration of an increase in Control Information.

The present invention can also be realized by processing in which a program for realizing one or more functions of the above-described exemplary embodiments is supplied to a system or an apparatus via a network or a storage media, and one or more processors in a computer of the system or the apparatus read and execute the program. The present invention can also be realized by a circuit (for example, ASIC) that realizes one or more functions.

The present invention is not limited to the above-described exemplary embodiments, and various modifications and variations can be made without departing from the spirit and scope of the present invention. Accordingly, the appended claims are intended to disclose the scope of the present invention.

This application claims the benefit of Japanese Patent Application No. 2021-193685, filed November 29, 2021, which is hereby incorporated by reference herein in its entirety.

## Claims

1. A communication apparatus that performs wireless communication complying with a standard of an Institute of Electrical and Electronics Engineers (IEEE) 802.11 series with a counterpart apparatus, the communication apparatus comprising:
transmission means for transmitting a media access control (MAC) frame in which designation of at least one of designation of a bandwidth of 320 megahertz (MHz), designation of allocation of a resource unit corresponding to 320 MHz, and designation of the number of spatial streams corresponding to 320 MHz is able to be set in an HLA Control subfield with a 26-bit width that is included in the MAC frame to be used in execution of Link Adaptation.

2. The communication apparatus according to Claim 1, wherein a bit width of at least one subfield in an HLA Control subfield with a 26-bit width that is included in a media access control (MAC) frame to be used in execution of Link Adaptation is reduced, and a bit width of at least one subfield of a subfield for designation of a bandwidth, a subfield for designation of allocation of a resource unit, and a subfield for designation of the number of spatial streams is increased.

3. A communication apparatus that performs wireless communication complying with a standard of an Institute of Electrical and Electronics Engineers (IEEE) 802.11 series with a counterpart apparatus, the communication apparatus comprising:
transmission means for transmitting a media access control (MAC) frame in which a bandwidth wider than a predetermined bandwidth is able to be designated by increasing at least the number of bits of a subfield relating to a bandwidth without increasing a total number of bits of an HLA Control subfield with a 26-bit width that is included in the MAC frame to be used in execution of Link Adaptation.

4. The communication apparatus according to Claim 3, wherein the transmission means transmits the MAC frame in which allocation of a resource unit and/or the number of spatial streams that are/is adapted to a bandwidth wider than the predetermined bandwidth is able to be designated by increasing the number of bits of at least one subfield of a subfield relating to allocation of a Resource unit (RU) and a subfield relating to a Number of Spational Streams (NSS) without increasing a total number of bits of an HLA Control subfield with a 26-bit width that is included in the MAC frame to be used in execution of Link Adaptation.

5. The communication apparatus according to Claim 4, wherein the transmission means transmits the MAC frame in which the number of bits of a part of subfields included in the HLA Control subfield with the 26-bit width is reduced, and the number of bits of at least one subfield of the subfield relating to the bandwidth, the subfield relating to allocation of an RU, and the subfield relating to the NSS is increased.

6. The communication apparatus according to any one of Claims 3 to 5, wherein the MAC frame to be transmitted by the transmission means is a MAC frame in which performing communication in a bandwidth up to 320 MHz is able to be designated.

7. The communication apparatus according to any one of Claims 3 to 6, wherein, in a case where connection is established in compliance with a communication standard that enables communication with the counterpart apparatus to be performed in a bandwidth up to 320 MHz, the MAC frame in which the number of bits of a subfield has been adjusted is transmitted, and in a case where connection is not established in compliance with a communication standard that enables communication with the counterpart apparatus to be performed in a bandwidth up to 320 MHz, the MAC frame in which the number of bits of a subfield is not adjusted is transmitted.

8. The communication apparatus according to any one of Claims 3 to 7, wherein the MAC frame is a frame to be used in transmission of a modulation and coding scheme request (MRQ) and/or a modulation and coding scheme feedback (MFB).

9. The communication apparatus according to Claim 8, wherein one of subfields of the MAC frame is a subfield corresponding to two usages of a subfield indicating that the MAC frame is the MRQ, and a subfield indicating that the MAC frame is the MFB of a type that is transmitted as a response to the MRQ.

10. The communication apparatus according to Claim 9, wherein, when the MAC frame indicates the MFB of a type that is transmitted by the communication apparatus even in a case where the MRQ has not been received, the subfield corresponding to two usages is further used as a subfield indicating a Number of Spational Streams (NSS).

11. The communication apparatus according to Claim 10, wherein one of subfields of the MAC frame is a subfield corresponding to two usages of a subfield indicating that the MAC frame is the MFB of a type relating to data transmission based on a trigger frame, and a subfield indicating that the MAC frame is the MRQ.

12. The communication apparatus according to any one of Claims 3 to 11, wherein the wireless communication is wireless communication complying with an IEEE 802.11be standard.

13. A control method of a communication apparatus that performs wireless communication complying with a standard of an Institute of Electrical and Electronics Engineers (IEEE) 802.11 series, with a counterpart apparatus, the control method comprising:
transmitting a media access control (MAC) frame in which a bandwidth wider than a predetermined bandwidth is able to be designated by increasing at least the number of bits of a subfield relating to a bandwidth without increasing a total number of bits of an HLA Control subfield with a 26-bit width that is included in the MAC frame to be used in execution of Link Adaptation.

14. A program of a communication apparatus that performs wireless communication complying with a standard of an Institute of Electrical and Electronics Engineers (IEEE) 802.11 series, with a counterpart apparatus, the control method comprising:
transmitting a media access control (MAC) frame in which a bandwidth wider than a predetermined bandwidth is able to be designated by increasing at least the number of bits of a subfield relating to a bandwidth without increasing a total number of bits of an HLA Control subfield with a 26-bit width that is included in the MAC frame to be used in execution of Link Adaptation.
